(19) Europäisches Patentamt / European Patent Office / Office européen des brevets

(11) **EP 2 491 517 B1**

(12) **FASCICULE DE BREVET EUROPEEN**

(45) Date de publication et mention de la délivrance du brevet:
**28.03.2018 Bulletin 2018/13**

(21) Numéro de dépôt: **10730394.3**

(22) Date de dépôt: **02.06.2010**

(51) Int Cl.:
***G06K 9/62*** *(2006.01)*

(86) Numéro de dépôt international:
**PCT/EP2010/057749**

(87) Numéro de publication internationale:
**WO 2011/047889 (28.04.2011 Gazette 2011/17)**

(54) **MÉTHODE ET SYSTÈME POUR ÉVALUER LA CLASSE D'UNE DONNÉE DE TEST DANS UN ESPACE DE DONNÉES DE GRANDE DIMENSION**

VERFAHREN UND SYSTEM ZUR BEURTEILUNG DER TESTDATENKLASSE IN EINEM GROSSEN DATENRAUM

METHOD AND SYSTEM FOR EVALUATING THE CLASS OF TEST DATA IN A LARGE-DIMENSION DATA SPACE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **23.10.2009 FR 0905116**

(43) Date de publication de la demande:
**29.08.2012 Bulletin 2012/35**

(73) Titulaire: **Commissariat à l'Énergie Atomique et aux Énergies Alternatives 75015 Paris (FR)**

(72) Inventeurs:
• **LESPINATS, Sylvain 75020 Paris (FR)**
• **AU PETIT, Mickaël 75015 Paris (FR)**

(74) Mandataire: **Lucas, Laurent Jacques Marks & Clerk France Conseils en Propriété Industrielle Immeuble Visium 22, Avenue Aristide Briand 94117 Arcueil Cedex (FR)**

(56) Documents cités:
**US-A1- 2009 097 733**

• J. Venna: "Dimensionality reduction for visual exploration of similarity structures" juin 2007 (2007-06), Helsinki University of Technology , XP002606694 , pages 1-81 Chapter 2. "Methods for dimensionality reduction" - Chapter 4. "Methods for visual neighbor retrieval"
• TANG W ED - LIU HUAN ET AL: "Chapter 15 : Pairwise Constraints-Guided dimensionality Reduction" 1 janvier 2007 (2007-01-01), COMPUTATIONAL METHODS OF FEATURE SELECTION; [CHAPMAN & HALL/CRC DATA MINING AND KNOWLEDGE DISCOVERY SERIES], BOCA RATON, FLA. [U.A.] : CAPMAN & HALL/CRC, US, PAGE(S) 295 - 312 , XP008128200 ISBN: 978-1-58488-878-9 le document en entier
• S. LESPINATS, M. AUPETIT: "False neighbourhoods and tears are the main mapping defaults. How to avoid it? How to exhibit remaining ones?" QUALITY ISSUES, MEASURES OF INTERESTINGNESS AND EVALUATION OF DATA MINING MODELS (QIMIE'09), PROC. 13-TH PACIFIC-ASIA CONFERENCE ON KNOWLEDGE DISCOVERY AND DATA MINING (PAKDD'09), 27 avril 2009 (2009-04-27), pages 55-65, XP002606695
• LESPINATS S ET AL: "DD-HDS: A Method for Visualization and Exploration of High-Dimensional Data" IEEE TRANSACTIONS ON NEURAL NETWORKS, IEEE SERVICE CENTER, PISCATAWAY, NJ, US LNKD-DOI:10.1109/TNN.2007.891682, vol. 18, no. 5, 1 septembre 2007 (2007-09-01), pages 1265-1279, XP011191397 ISSN: 1045-9227

**Description**

La présente invention concerne une méthode et un système pour évaluer la classe d'une donnée de test dans un espace métrique d'origine, chaque donnée appartenant à au moins une classe regroupant plusieurs données. Par exemple, la donnée peut être une donnée numérisée incluant une ou plusieurs mesures de caractéristiques physiques d'un objet, l'objet pouvant être un objet matériel, un individu, l'état d'un système, ou encore un groupe de tels objets, individus ou états, dont on mesure des caractéristiques physiques.

L'invention s'applique notamment dans le domaine de l'aide à la décision en discrimination, plus particulièrement dans le domaine de la reconnaissance de formes. Par exemple, l'invention trouve des applications dans l'aide au diagnostique médical, comme le diagnostic des mélanomes, ou encore dans la discrimination de la nature d'événements sismiques.

Les discriminateurs ne sont pas complètement adaptés au domaine de l'aide à la décision. En effet, lorsqu'une donnée est présentée à un discriminateur, celui-ci propose une décision d'appartenance à une classe (éventuellement munie d'un indice d'appartenance), une classe étant un ensemble de données présentant des analogies. Pourtant, l'utilisateur n'est, en général, pas expert en apprentissage statistique et classification. Il est alors à craindre que la décision rendue par le discriminateur soit considérée avec trop de confiance ou de méfiance, certains utilisateurs acceptant systématiquement la décision automatique, d'autres n'en tenant jamais compte.

Une solution pour remédier à ce problème est l'utilisation d'une méthode de réduction de dimension permettant de représenter les données, dans un espace euclidien de dimension 2 ou 3 le plus souvent, en préservant les distances entre données. En effet, un point critique pour la compréhension des données par l'utilisateur est qu'elles sont généralement de grande dimension, donc inintelligibles. Par la suite, on désignera par "données d'origine" l'ensemble des données permettant la construction de la représentation et par "points de la représentation" leurs équivalents dans l'espace de représentation. Ainsi, "l'espace d'origine" désignera l'espace des données d'origine et "l'espace de représentation" désignera l'espace sur lequel la représentation est achevée, cet espace étant parfois aussi appelé "carte". Ainsi, les méthodes de réduction de dimension permettent de résumer les relations entre données sous forme d'une carte où la position des points peut être décrite à l'aide de peu de paramètre. En particulier, un moyen populaire consiste à construire une carte des données dans un plan en optimisant la préservation des distances.

L'intérêt de ce type d'approche peut être illustré sur un exemple relatif à la reconnaissance d'objets que sont des caractères manuscrits. Dans cet exemple, les données peuvent être des imagettes de chiffres manuscrits de 8 x 8 pixels en niveaux de gris, une imagette pouvant alors être vue comme un point dans un espace à 64 dimensions. Les données peuvent donc appartenir à dix classes correspondant aux dix chiffres de 0 à 9. Il s'agit alors de placer les imagettes sur un espace bidimensionnel formé par la carte, de telle sorte que la distance euclidienne entre les représentations de deux imagettes sur cette carte soit aussi proche que possible de la distance entre les deux imagettes elles-mêmes dans l'espace d'origine au sens d'une mesure de dissimilarité. Ainsi, la proximité de deux imagettes est matérialisée par la proximité des points qui leurs sont associés sur la carte.

La plupart des méthodes existantes pour construire une carte des données sont des méthodes non-supervisées, c'est-à-dire qu'elles ne tiennent pas compte de l'appartenance éventuelle des données à des classes de données pour les placer sur la carte. Par exemple, dans le cas des imagettes de chiffres manuscrits, les données peuvent être séparées en dix classes équilibrées correspondant aux dix chiffres (0, 1, 2, ..., 9), chaque imagette étant étiquetée comme appartenant à une de ces 10 classes. Une méthode non supervisée conduit donc à une carte des imagettes dans laquelle les imagettes sont placées sans tenir compte des chiffres qu'elles représentent. Un inconvénient majeur est que des classes peuvent se mélanger sans pour autant que cela corresponde à une réalité propre aux données. Dans de tels cas, un caractère essentiel du jeu de données est perdu.

Une solution supervisée classique est fournie par l'Analyse Factorielle Discriminante (AFD) (Fisher R.A., "The Use of Multiple Measurements in Taxonomic Problems", Annals of Eugenics, n°7, p. 179-188, 1936; Gilbert Saporta, Probabilités, Analyse des données et Statistique, 2006), qui est une méthode linéaire permettant de proposer une représentation supervisée des données. Cette méthode a pour but de trouver un sous-espace sur lequel la projection orthogonale des données discrimine au mieux les classes, c'est-à-dire qu'elle recherche la projection qui minimise le rapport entre la variance intra- et inter-classe. Cette méthode présente cependant deux inconvénients majeurs. D'une part, l'AFD est linéaire, elle n'est donc pas efficace lorsqu'il existe des relations non-linéaires entre des variables. D'autre part, l'AFD fait l'hypothèse que l'espace des données est euclidien.

Une généralisation de l'AFD destinée à tenir compte de relations non-linéaires par l'utilisation du "kernel trick" existe également depuis 1999. Cette méthode, baptisée "Kernel Fisher Discriminant Analysis" (KFD) (Mika S., Rätsch G., Weston J., Schölkopf B., Müller K-R., "Fisher Discriminant Analysis with Kernels", Neural Networks for Signal Processing, vol. 9, 1999, p. 41-48) fonctionne d'une façon comparable à l'AFD, mais dans un espace augmenté par le noyau utilisé. Cette méthode a toutefois les inconvénients habituels des méthodes à noyaux. En particulier, il est indispensable de choisir un noyau, ce qui n'est pas simple, vu l'importante littérature sur le sujet. De plus, on fait l'hypothèse d'un modèle relativement simple implicite aux données. Pourtant, il existe de nombreux jeux de données pour lesquels cette hypothèse ne s'applique pas.

Plusieurs méthodes de réduction de dimension "pseudo-supervisées" ont également été proposées. Elles correspondent pour la plupart à des méthodes non-supervisées dans lesquelles les distances subissent un prétraitement avant placement sur la carte. Peuvent être citées les méthodes suivantes:

- "Supervised Curvilinear Components Analysis" (Laanaya H., Martin A., Aboutajine D. and Khenchaf A., "A New Dimensionality Reduction Method for Seabed Characterization: Supervised Curvilinear Component Analysis", IEEE OCEANS'05 EUROPE, Brest, France, 20-23 June 2005; Laanaya H., Martin A., Khenchaf A. and Aboutajine D, "Une nouvelle méthode pour l'extraction de paramètres : l'analyse en composante curvilinéaire supervisée, Atelier Fouille de données complexes dans un processus d'extraction de connaissance", Extraction et Gestion des Connaissances (EGC), pp 21-32, Namur, Belgique, 24-26 January 2007);
- "Supervised Locally Linear Embedding" (O. Kouropteva, O. Okun, A. Hadid, M. Soriano, S. Marcos, and M. Pietikainen., "Beyond locally linear embedding algorithm - Technical Report MVG-01-2002", Machine Vision Group, University of Oulu, 2002; D. de Ridder, O. Kouropteva, and O. Okun., "Supervised locally linear embedding - Lecture Notes in Artificial Intelligence", 2714:333-341, 2003; D. de Ridder, M. Loog, M.J.T. Reinders, "Local Fisher embedding", in Proceedings of the 17th International Conference on Pattern Recognition, 2004, pp. 295-298);
- "Supervised Isomap (S-isomap)" (S. Weng, C. Zhang, Z. Lin, "Exploring the structure of supervised data by discriminant isometric mapping", Pattern Recognition 38 (2005) 599-601; Geng X., ZhanD.C. and Zhou Z.H., "Supervised nonlinear dimensionality reduction for visualization and classification", IEEE Transactions on Systems, Man, and Cybernetics, Part B 35(6): 1098-1107, 2005);
- "SE-isomap" (Li C.G. and Guo J., "Supervised isomap with explicit mapping", in Proceedings of the 1st IEEE International Conference on Innovative Computing, Information and Control, ICICIC '06, Beijing, China, August 2006).

D'une façon ou d'une autre, ces méthodes "pseudo-supervisées" utilisent toujours une matrice des distances modifiées, afin d'augmenter artificiellement les distances inter-classes et/ou de réduire les distances intra-classes. Ensuite, une méthode non-supervisée est mise en oeuvre à partir des distances modifiées. Ainsi, les classes sont toujours identifiables sur la représentation, même lorsque les classes sont parfaitement mélangées dans l'espace des données. Ce genre de technique est donc davantage un moyen de visualiser les classes individuellement qu'un moyen d'appréhender l'organisation spatiale des données, celle-ci étant très altérée par le prétraitement. De plus, du fait de la manipulation des distances, les distances dans les espaces d'origine et de représentation ne sont plus comparables avec ce genre de techniques.

Une méthode de réduction de dimension non supervisée appelée "Data-Driven High Dimensional Scaling" (DD-HDS) (Lespinats S., Verleysen M., Giron A. and Fertil B., "DD-HDS: a tool for visualization and exploration of highdimensional data", IEEE Trans. Neural Netw., vol. 18, no. 5, pp. 1265-1279, 2007) a alors été mise au point afin de surmonter les inconvénients précités. La méthode DD-HDS suggère, entre autres, d'utiliser une fonction de pondération *G* permettant d'accorder plus ou moins d'importance aux distances selon qu'elles sont grandes ou petites, et ce en tenant compte du phénomène de concentration de la mesure. Cette méthode permet par exemple de reduire sur des espaces à 2 ou 3 dimensions des données issues d'espaces beaucoup plus grands, en préservant l'organisation spatiale des données. Mais malheureusement, comme explicité par la suite, dans des cas difficiles, on ne peut éviter de commettre des erreurs de représentation, que la méthode soit supervisée ou non. Et les différences entre les résultats des méthodes les plus efficaces sont généralement liées à la position desdites erreurs. Or, dans le cadre de la méthode DD-HDS, de telles erreurs peuvent fort bien gêner la lecture de la carte en brouillant une organisation liée aux classes. Dans un tel cas de figure, il devient hasardeux de déterminer la classe d'une donnée non-étiquetée à partir de sa position sur la carte.

L'invention a notamment pour but de préserver l'organisation spatiale des données en avantageant l'expression des classes, Pour cela, l'invention propose d'optimiser le positionnement des points en préservant les distances, une fonction de pondération permettant de quantifier l'importance de chaque distance. Elle offre donc un intérêt considérable dans le domaine de l'aide à la décision, où une présentation intuitive de l'organisation des données se révèle très bénéfique. En effet, l'addition d'information de classes simplifie considérablement les choix de positionnement des erreurs. La méthode supervisée non-linéaire selon l'invention joue sur les poids attribués aux distances lors de la convergence de l'algorithme pour moins pénaliser les éventuelles erreurs de représentation si elles n'altèrent pas l'organisation des classes. Ainsi, même si des erreurs sont nécessaires à la représentation des données, celles-ci sont guidées vers des régions où elles sont moins pénalisantes. Il en résulte une représentation de l'organisation spatiale des données particulièrement fidèle, regroupant les données de même classe lorsque c'est compatible avec les distances dans l'espace d'origine et les contraintes de l'espace de représentation.

A cet effet, l'invention a pour objet une méthode pour évaluer la classe d'une donnée de test dans un espace métrique d'origine, chaque donnée appartenant à au moins une classe regroupant plusieurs données. La méthode comporte une étape de représentation de l'organisation spatiale d'un jeu de données d'apprentissage de l'espace d'origine dans un espace métrique de représentation, un niveau d'appartenance conjointe permettant de savoir si deux données quelconques du jeu d'apprentissage appartiennent à une même classe. Cette étape de représentation comporte une étape de projection des données du jeu d'apprentissage vers l'espace métrique de représentation, les positions des projections des données dans l'espace de représentation étant celles qui minimisent ou maximisent une fonction $E$. La fonction $E$ dépend des écarts entre les distances pondérées entre les données du jeu d'apprentissage dans l'espace d'origine et les distances entre leurs projections respectives dans l'espace de représentation. La pondération affectée dans la fonction $E$ à une distance entre deux données du jeu d'apprentissage dépend du fait que ces deux données appartiennent à une même classe, de manière à préserver, dans l'espace de représentation, l'organisation spatiale relative des classes. La méthode comporte également une étape de mise en relation de la donnée de test avec les projections des données du jeu d'apprentissage, la classe la plus probable de la donnée de test étant la classe des projections des données du jeu d'apprentissage en relation avec la donnée de test.

Par exemple, les données peuvent être des données numérisées, les données numérisées pouvant inclure une ou plusieurs mesures de caractéristiques physiques d'un objet, qu'il s'agisse d'un objet matériel ou d'un individu ou encore de l'état d'un système, ou qu'il s'agisse d'un groupe de tels objets, individus ou états, dont des caractéristiques physiques peuvent être mesurées.

Avantageusement, l'organisation spatiale relative des classes peut être préservée dans l'espace de représentation en ce que deux classes distinctes de données du jeu d'apprentissage ont les projections de leurs données rassemblées dans deux zones connexes disjointes respectivement, si les données de ces deux classes sont elles-mêmes rassemblées dans deux zones connexes disjointes de l'espace d'origine. Ainsi, dans un mode de réalisation préférentiel, l'étape de mise en relation peut comporter une étape de projection de la donnée de test dans l'espace de représentation, la classe la plus probable de la donnée de test pouvant être la classe correspondant à la zone connexe dans laquelle se trouve la projection de la donnée de test.

Par exemple, l'espace métrique d'origine peut être de dimension $N \geq 3$ et l'espace métrique de représentation peut être de dimension 2 ou 3.

Avantageusement, les projections des données du jeu d'apprentissage peuvent être représentées dans un repère orthonormé de l'espace métrique de représentation.

Dans un mode de réalisation préférentiel, une distance $d_{ij}^*$ dans l'espace de représentation entre les projections de deux données $i$ et $j$ quelconques du jeu d'apprentissage peut être la distance qui minimise une fonction de stress $E$ = $\sum E_{ij}$. $E_{ij}$ peut être une fonction de stress local dépendant de la distance entre les données $i$ et $j$, telle que

$$E_{ij} = F\left(d_{ij}, d_{ij}^*\right) \times G\left(d_{ij}, d_{ij}^*\right),$$ où $d_{ij}$ peut être une mesure de dissimilarité entre les données i et j dans l'espace d'origine et $d_{ij}^*$ peut être la distance entre les projections des données i et j dans l'espace de représentation. $F$ peut être une fonction qui quantifie la différence entre $d_{ij}$ et $d_{ij}^*$, F étant minimum quand $d_{ij} = d_{ij}^*$. $G$ peut être une fonction de pondération telle que $G\left(d_{ij}, d_{ij}^*\right) = \varphi\left(G^{\text{int } ra}\left(d_{ij}, d_{ij}^*\right), G^{\text{int } er}\left(d_{ij}, d_{ij}^*\right), C_{ij}\right)$, où $C_{ij}$ peut être le niveau d'appartenance conjointe à valeur dans un intervalle réel, $G^{\text{int } ra}$ et $G^{\text{int } er}$ peuvent être des fonctions de pondération et $\varphi$ peut être une fonction telle qu'il existe au moins une valeur de $C_{ij}$ pour laquelle $G = G^{\text{int } ra}$ et au moins une valeur de $C_{ij}$ pour laquelle $G = G^{\text{int } er}$.

Par exemple, le niveau d'appartenance conjointe peut être à valeur dans {0,1}, pouvant valoir 1 si i et j appartiennent à une même classe et pouvant valoir 0 sinon.

Par exemple, $F\left(d_{ij}, d_{ij}^*\right) = \left|d_{ij} - d_{ij}^*\right|^2$ et $G^{\text{int } ra}\left(d_{ij}, d_{ij}^*\right) = g\left(d_{ij}\right)$ et $G^{\text{int } er}\left(d_{ij}, d_{ij}^*\right) = g\left(d_{ij}^*\right)$, où g peut être la fonction sigmoïde inversée de paramètre $\lambda$.

La présente invention a également pour objet une méthode pour aider un utilisateur à décider la classe d'une donnée de test dans un espace de données de dimension N où $N \geq 3$, chaque donnée appartenant à une classe regroupant plusieurs données. La méthode comporte une étape selon l'invention pour évaluer la classe de la donnée de test, ainsi qu'une étape de présentation à l'utilisateur de la classe la plus probable pour la donnée de test.

Par exemple, les données peuvent être des caractères manuscrits numérisés, les classes pouvant regrouper les caractères identiques. Les données peuvent également être des courbes sismiques numérisées, une classe pouvant regrouper les courbes dont l'enregistrement correspond à un tremblement de terre et une autre classe pouvant regrouper les courbes dont l'enregistrement ne correspond pas à un tremblement de terre. Les données peuvent également être des photographies numériques de mélanomes, une classe pouvant regrouper les photographies de mélanomes malins et une autre classe pouvant regrouper les photographies de mélanomes bénins.

La présente invention a également pour objet un système pour évaluer la classe d'une donnée de test dans un espace métrique d'origine, chaque donnée appartenant à au moins une classe regroupant plusieurs données. Le système comporte un module de représentation de l'organisation spatiale d'un jeu de données d'apprentissage de l'espace d'origine dans un espace métrique de représentation, un niveau d'appartenance conjointe permettant de savoir si deux données quelconques du jeu d'apprentissage appartiennent à une même classe. Le module de représentation comporte un module de projection des données du jeu d'apprentissage vers l'espace métrique de représentation, les positions des projections des données dans l'espace de représentation étant celles qui minimisent ou maximisent une fonction $E$. La fonction $E$ dépend des écarts entre les distances pondérées entre les données du jeu d'apprentissage dans l'espace d'origine et les distances entre leurs projections respectives dans l'espace de représentation. La pondération affectée dans la fonction $E$ à une distance entre deux données du jeu d'apprentissage dépend du fait que ces deux données appartiennent à une même classe, de manière à préserver, dans l'espace de représentation, l'organisation spatiale relative des classes. Le module de représentation comporte également un module de représentation des projections des données du jeu d'apprentissage. Le système comporte également un module de mise en relation de la donnée de test avec les projections des données du jeu d'apprentissage, la classe la plus probable de la donnée de test étant la classe des projections des données du jeu d'apprentissage en relation avec la donnée de test.

Par exemple, les données peuvent être des données numérisées, les données numérisées pouvant inclure une ou plusieurs mesures de caractéristiques physiques d'un objet, qu'il s'agisse d'un objet matériel ou d'un individu ou encore de l'état d'un système, ou qu'il s'agisse d'un groupe de tels objets, individus ou états, dont des caractéristiques physiques peuvent être mesurées.

Avantageusement, l'organisation spatiale relative des classes peut être préservée dans l'espace de représentation en ce que deux classes distinctes de données du jeu d'apprentissage ont les projections de leurs données rassemblées dans deux zones connexes disjointes respectivement, si les données de ces deux classes sont elles-mêmes rassemblées dans deux zones connexes disjointes de l'espace d'origine. Ainsi, dans un mode de réalisation préférentiel, le module de mise en relation peut comporter un module de projection de la donnée de test dans l'espace de représentation, la classe la plus probable de la donnée de test étant la classe correspondant à la zone connexe dans laquelle se trouve la projection de la donnée de test.

Par exemple, l'espace métrique d'origine peut être de dimension $N \geq 3$ et l'espace métrique de représentation peut être de dimension 2 ou 3.

Avantageusement, les projections des données du jeu d'apprentissage peuvent être représentées dans un repère orthonormé de l'espace métrique de représentation.

Dans un mode de réalisation préférentiel, une distance $d_{ij}^{*}$ dans l'espace de représentation entre les projections de deux données $i$ et $j$ quelconques du jeu d'apprentissage peut être la distance qui minimise une fonction de stress

$$E = \sum_{i,j} E_{ij} \cdot$$

$E_{ij}$ peut être une fonction de stress local dépendant de la distance entre les données $i$ et $j$, telle que

$$E_{ij} = F\left(d_{ij}, d_{ij}^{*}\right) \times G\left(d_{ij}, d_{ij}^{*}\right),$$ où $d_{ij}$ peut être une mesure de dissimilarité entre les données i et j dans l'espace d'origine et $d_{ij}^{*}$ peut être la distance entre les projections des données i et j dans l'espace de représentation. $F$ peut être une fonction qui quantifie la différence entre $d_{ij}$ et $d_{ij}^{*}$, F étant minimum quand $d_{ij}\, d_{ij} = d_{ij}^{*}$. $G$ peut être une fonction de pondération telle que $G\left(d_{ij}, d_{ij}^{*}\right) = \varphi\left(G^{\text{int}\,ra}\left(d_{ij}, d_{ij}^{*}\right), G^{\text{int}\,er}\left(d_{ij}, d_{ij}^{*}\right), C_{ij}\right)$, où $C_{ij}$ peut être le niveau d'appartenance conjointe à valeur dans un intervalle réel, $G^{\text{int}\,ra}$ et $G^{\text{int}\,er}$ peuvent être des fonctions de pondération et $\varphi$ peut être une fonction telle qu'il existe au moins une valeur de $C_{ij}$ pour laquelle $G = G^{\text{int}\,ra}$ et au moins une valeur de $C_{ij}$ pour laquelle $G = G^{\text{int}\,er}$.

Par exemple, le niveau d'appartenance conjointe peut être à valeur dans {0,1}, pouvant valoir 1 si $i$ et $j$ appartiennent à une même classe et pouvant valoir 0 sinon.

Par exemple, $F\left(d_{ij}, d_{ij}^{*}\right) = \left|d_{ij} - d_{ij}^{*}\right|^{2}$ et $G^{\text{int}\,ra}\left(d_{ij}, d_{ij}^{*}\right) = g\left(d_{ij}\right)$ et $G^{\text{int}\,er}\left(d_{ij}, d_{ij}^{*}\right) = g\left(d_{ij}^{*}\right)$, où g peut être la fonction sigmoïde inversée de paramètre $\lambda$.

Par exemple, les données peuvent être des caractères manuscrits numérisés, les classes pouvant regrouper les caractères identiques. Les données peuvent également être des courbes sismiques numérisées, une classe pouvant regrouper les courbes dont l'enregistrement correspond à un tremblement de terre et une autre classe pouvant regrouper les courbes dont l'enregistrement ne correspond pas à un tremblement de terre. Les données peuvent également être des photographies numériques de mélanomes, une classe pouvant regrouper les photographies de mélanomes malins et une autre classe pouvant regrouper les photographies de mélanomes bénins.

L'invention a encore pour principaux avantages qu'elle rend également compte de l'organisation inter-classes, de l'organisation intra-classes, ainsi que des données ambiguës et des "outliers" (selon l'expression anglo-saxonne). Elle permet également de mettre en valeur l'absence d'organisation en classes quand des classes sont très mélangées dans l'espace d'origine, car elle n'altère pas les distances d'origines.

De plus, l'invention propose une méthode non-linéaire qui reste efficace lorsqu'il existe des relations non-linéaires entre des variables.

D'autres caractéristiques et avantages de l'invention apparaîtront à l'aide de la description qui suit faite en regard de figures annexés qui représentent :

- la figure 1, une illustration d'un exemple de faux-voisinage et de déchirement;
- la figure 2, un exemple de carte de données obtenue par la méthode DD-HDS selon l'art antérieur;
- la figure 3, un exemple de carte des mêmes données obtenue par un système implémentant la méthode supervisée selon l'invention.

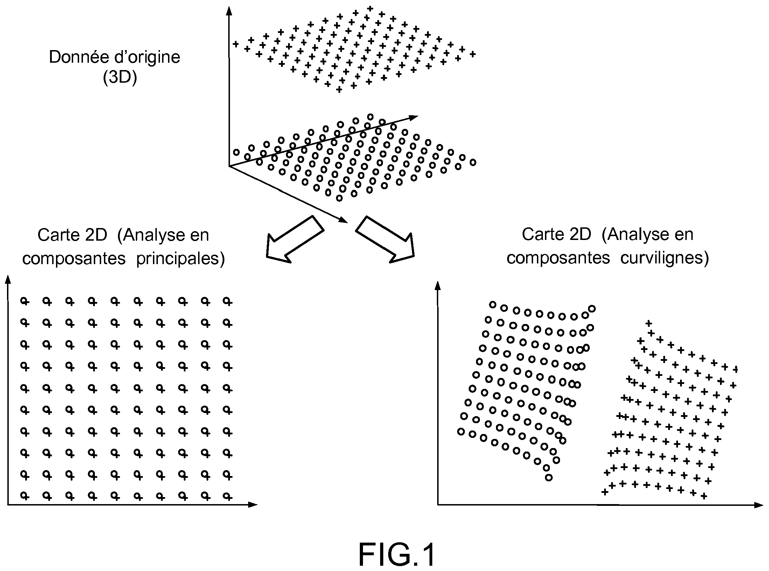

La figure 1 illustre un exemple de faux-voisinage obtenu par Analyse en Composantes Principales (ACP) en bas à gauche et de déchirements obtenu par Analyse en Composantes Curvilignes (ACC) en bas à droite. En effet, un principe de l'invention est de pénaliser plus ou moins suivant le cas les faux-voisinages, c'est-à-dire les données éloignées représentées comme voisines, et les déchirements, c'est-à-dire les données proches représentées comme éloignées. L'invention propose de mettre l'accent sur l'évitement des déchirements au sein des classes et des faux voisinages entre les classes. Ainsi, la continuité intra-classes et la séparation des classes est privilégiée quand elle existe.

Pour l'ensemble des données utilisées pour générer la carte, le degré d'appartenance conjointe entre chaque couple de données est connu *a priori,* c'est pourquoi ce jeu de données sera appelé "base d'apprentissage", par opposition aux données ajoutées *a posteriori* qui seront appelées "données de test" et dont la classe n'est généralement pas connue. Il faut noter que l'ensemble des classes ne forme pas nécessairement une partition des données de la base d'apprentissage, même si c'est le cas le plus souvent. En effet, une donnée peut éventuellement appartenir à plusieurs classes. L'hypothèse est faite qu'il existe une mesure de dissimilarité entre les données de la base d'apprentissage. Notons ici que tout type de mesure ou de dissimilarité peut être utilisé, sachant qu'une dissimilarité est une fonction qui vérifie deux des trois propriétés d'une distance, à savoir la symétrie et la séparation, mais qui ne vérifie pas nécessairement l'inégalité triangulaire. Ce point est un avantage important de l'invention par rapport à la plupart des discriminateurs, qui font souvent l'hypothèse, au moins implicite, que l'espace des données est euclidien.

Comme explicité précédemment, il s'agit de projeter les données de la base d'apprentissage dans un espace de représentation. Le plus couramment, cet espace est un plan, c'est-à-dire un espace euclidien à 2 dimensions, mais il est possible de faire une représentation dans des espaces métriques différents, suivant les caractéristiques des données de la base d'apprentissage et/ou suivant les objectifs poursuivis. La projection préserve les distances entre données en avantageant les distances courtes.

Par la suite, la représentation d'une donnée i dans l'espace de représentation sera appelée un point i. Avantageusement, la projection "idéale" des données peut être obtenue par optimisation: les données peuvent être placées dans l'espace de représentation de manière à minimiser ou maximiser une fonction notée $E$ généralement baptisée "stress".

Dans le présent exemple, il peut s'agir par exemple de minimiser une fonction $E$ définie à partir d'un stress local noté $E_{ij}$, qui est lié à la distance entre deux points i et j, et qui est donné par l'équation 1 qui suit:

$$E_{ij} = F\left(d_{ij}, d_{ij}^*\right) \times G\left(d_{ij}, d_{ij}^*\right) \qquad \text{(eq. 1)}$$

où $d_{ij}$ est la dissimilarité considérée entre les données *i* et *j*, $d_{ij}^*$ est la distance entre les points associés dans l'espace de représentation.

Dans le présent exemple:

○ le stress est la somme des stresses locaux: $E = \sum_{i,j} E_{ij}$ ;

○ *F* est une fonction quantifiant la différence entre $d_{ij}$ et $d_{ij}^*$, *F* prend donc une valeur minimum quand $d_{ij} = d_{ij}^*$ (ou une valeur maximum si *E* doit être maximisée);

○ *G* est une fonction de pondération permettant d'accorder plus ou moins d'importance aux distances selon l'objectif. L'invention propose d'adapter G selon que $d_{ij}$ correspond à une distance inter- ou intraclasse, comme exprimé par l'équation 2 qui suit:

$$G\left(d_{ij}, d_{ij}^*\right) = \varphi\left(G^{\mathrm{intra}}\left(d_{ij}, d_{ij}^*\right), G^{\mathrm{inter}}\left(d_{ij}, d_{ij}^*\right), C_{ij}\right) \qquad \text{(eq. 2)}$$

où $G^{\text{int } ra}$ et $G^{\text{int } er}$ sont des fonctions de pondération différentes *et* $C_{ij}$ est le niveau d'appartenance conjointe aux classes pour les données *i* et *j*. Par exemple, on peut considérer que $C_{ij} = 0$ si les classes de *i* et *j* sont différentes et $C_{ij} = 1$ si *i* et *j* appartiennent à la même classe. Ce formalisme peut également servir de support à des notions d'appartenance multiple, d'appartenance floue ou de probabilité d'appartenance, ceci en permettant à $C_{ij}$ de prendre des valeurs dans un intervalle (dans [0, 1] par exemple). $\varphi$ est telle qu'il existe au moins une valeur possible pour $C_{ij}$ pour laquelle $G = G^{\text{int } ra}$ et au moins une valeur possible pour $C_{ij}$ pour laquelle $G = G^{\text{int } er}$.

Par exemple, la fonction F peut être donnée par:

$$F\left(d_{ij}, d_{ij}^{*}\right) = \left| d_{ij} - d_{ij}^{*} \right|$$

Par exemple, la fonction $\varphi$ peut être donnée par:

$$\varphi\left(G^{\text{int } ra}\left(d_{ij}, d_{ij}^{*}\right), G^{\text{int } er}\left(d_{ij}, d_{ij}^{*}\right), C_{ij}\right) = C_{ij} \times G^{\text{int } ra}\left(d_{ij}, d_{ij}^{*}\right) + \left(1 - C_{ij}\right) \times G^{\text{int } ra}\left(d_{ij}, d_{ij}^{*}\right)$$

où $C_{ij}$ compris entre 0 et 1.

Par exemple, les fonctions $G_{\text{inter}}$ et $G_{\text{intra}}$ peuvent être données par:

$$G^{\text{int } ra}\left(d_{ij}, d_{ij}^{*}\right) = g\left(d_{ij}\right)$$

$$G^{\text{int } er}\left(d_{ij}, d_{ij}^{*}\right) = g\left(d_{ij}^{*}\right)$$

où $g$ est une fonction sigmoïde inversée de paramètre $\lambda$, de sorte qu'elle est décroissante, définie comme suit:

$$g(x) = 1 - \int_{-\infty}^{x} \phi(u, \mu(\lambda), \sigma(\lambda)) du$$

où $\phi(u, \mu(\lambda), \sigma(\lambda))$ est la fonction de densité gaussienne de moyenne $\mu(\lambda)$ et d'écart-type $\sigma(\lambda)$, avec

$$\mu(\lambda) = \underset{i<j}{mean}\left(d_{ij}\right) - 2 \times (1-\lambda) \times \underset{i<j}{std}\left(d_{ij}\right) \text{ et } \sigma(\lambda) = 2 \times \lambda \times \underset{i<j}{std}\left(d_{ij}\right);$$

où *mean* est une fonction retournant la moyenne définie par :

$$mean\left(\{x_1, x_2, ..., x_i, ..., x_n\}\right) = \frac{1}{n} \sum_{i=1}^{n} x_i \; ;$$

et où *std* est une fonction retournant l'écart-type définie par:

$$std\left(\{x_1, x_2, ..., x_i, ..., x_n\}\right) = \sqrt{\frac{1}{n} \sum_{i=1}^{n} \left(x_i - mean(x_i)\right)^2} \; .$$

Ainsi, la carte reste fidèle à l'organisation des données lorsque c'est possible, c'est-à-dire lorsque la différence entre distances observées et reconstruites peut être minimisée. En cas de problème, les déchirements sont moins pénalisés s'ils se produisent entre deux classes et les faux-voisinages sont mieux tolérés au sein d'une même classe. Avantageusement, la méthode proposée minimise le nombre d'étapes de calcul dans lesquels de l'information peut être perdue. En effet, les méthodes supervisées de l'état de l'art perdent de l'information à l'étape de modification des distances puis à l'étape de représentation, tandis que la méthode selon l'invention ne perd de l'information que dans l'étape de représentation. Pour preuve, lorsqu'elles sont utilisées avec des espaces d'origine et de représentation de même dimension, le positionnement des données diffère, ce qui n'est pas le cas avec la présente méthode. La méthode permet l'utilisation des méthodes classiques pour l'évaluation des réductions de dimension, du type des diagrammes de Shepard, etc. Enfin, cela rend plus facile le positionnement *a posteriori* de données non étiquetées dans la représentation. Avantageusement, la méthode offre la possibilité de tenir compte des caractéristiques particulières des données de grande dimension ("fléau de la dimension"). Avantageusement, la méthode permet de définir un degré d'appartenance à chaque classe. Les données peuvent alors appartenir (plus ou moins) à plusieurs classes. En conséquence, les classes ne forment pas nécessairement une partition des données d'apprentissage.

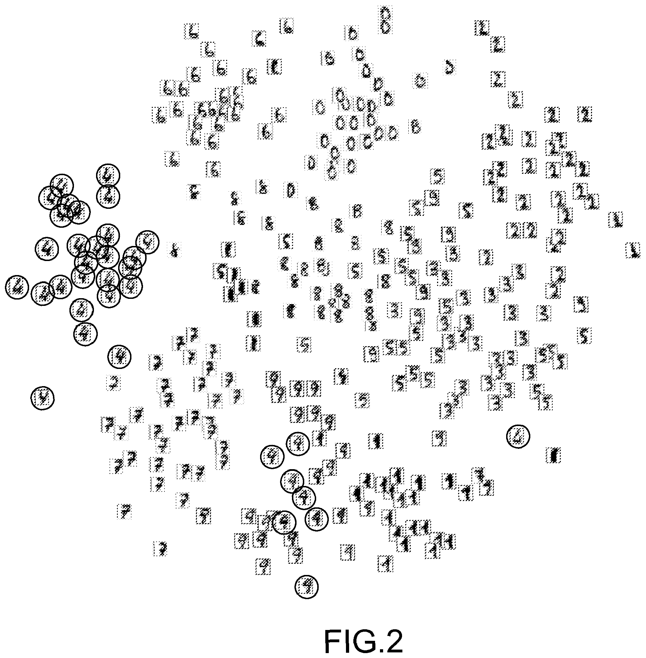

La figure 2 illustre un exemple de carte de données obtenue par la méthode DD-HDS de l'art antérieur. Pour cet exemple, 300 imagettes de chiffres manuscrits de 8 x 8 pixels en niveaux de gris, séparées en 10 classes équilibrées correspondant au dix chiffres (0, 1, 2, ..., 9) ont été choisies. Ce jeu de données présente l'avantage d'être facilement interprétable par l'oeil humain, il est donc aisé d'évaluer visuellement le résultat obtenu. La méthode DD-HDS utilise également une fonction de pondération, mais celle-ci est la même, que les points *i* et *j* appartiennent à la même classe ou non.

Certaines données appartenant à une même classe occupent clairement une zone de l'espace bien repérable visuellement. C'est notamment le cas en haut de la carte pour les imagettes représentant un 0, un 6, un 2 ou un 8, qui peuvent être regroupées dans des zones bien délimitées qui ne se recouvrent pas.

Pour d'autres données, il est moins évident de délimiter des zones, les zones occupées par les classes se recouvrant partiellement. C'est notamment le cas au milieu de la carte pour les imagettes représentant des 3, des 5 et des 9 qui tendent à se mélanger parce qu'elles se ressemblent. Ainsi, il n'est pas possible de regrouper les 3 dans une zone bien délimitée, sauf en englobant aussi des 9.

Enfin, pour d'autres données il est impossible même de reconnaître des zones. C'est notamment le cas pour les imagettes entourées d'un cercle qui représentent un 4. Elles sont éparpillées dans le bas de la carte, certaines pouvant facilement être confondues avec un 9 ou un 1. Les imagettes représentant un 9 sont également éparpillées sur la carte, certaines pouvant être confondues avec un 3 ou un 5. On peut dire de même pour les imagettes représentant un 1, qui peuvent être confondues avec un 2 ou un 8.

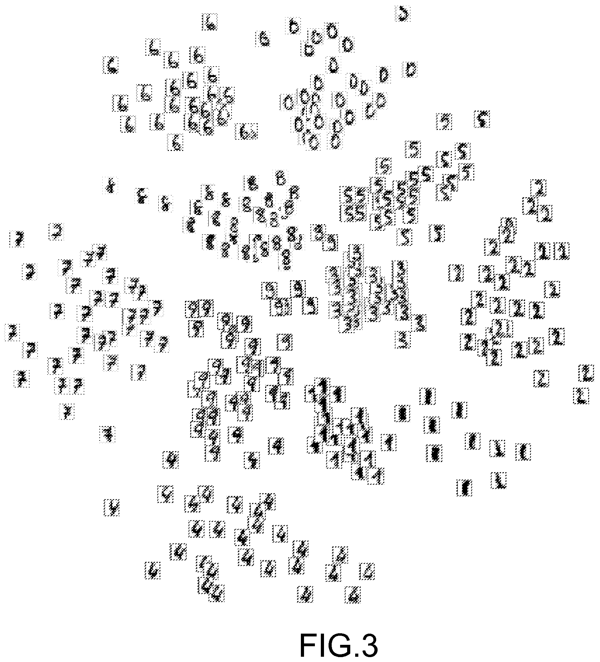

La figure 3 illustre un exemple de carte de données obtenue par un système implémentant la méthode selon l'invention. Les données sont les mêmes 300 imagettes que celles utilisées pour l'exemple de la figure 2. Dans le présent exemple, la fonction de pondération G est choisie par exemple avec un paramètre $\lambda = 0,9$.

Cette fois, toutes les données appartenant à une même classe occupent clairement une même zone de l'espace. Les zones sont faciles à délimiter, car elles ne se recouvrent pas. Ainsi, l'appréhension de l'organisation est beaucoup plus facile sur une carte selon l'invention.

Bien évidemment, l'invention peut également être utilisée sur des données moins intelligibles, comme des courbes sismiques ou des photographies de mélanomes par exemple, où le bénéfice est potentiellement beaucoup plus important.

Etablir un diagramme de Shepard est un moyen classique pour l'évaluation de la qualité de la préservation des distances. Si l'on établit de tels diagrammes pour les deux exemples des figures 2 et 3 en distinguant les distances intra- et inter-classes, on constate que la préservation des distances courtes est comparable pour les deux méthodes, les distances courtes étant bien préservées dans les deux cas. On constate surtout que la différence majeure entre les deux méthodes concerne la préservation des longues distances, qui sont plus déformées par la méthode supervisée selon l'invention. Pourtant, il est couramment admis que, dans un cadre comparable, l'importance des longues distances est négligeable. En ce qui concerne les distances courtes, les déformations commises sont du même ordre en qualité comme en quantité. C'est donc avant tout par leur position que les représentations diffèrent. A l'évidence, la méthode supervisée selon l'invention guide les déchirements nécessaires entre les classes et les faux-voisinages sur les distances intra-classes.

Il faut également noter que la carte de la figure 3 obtenue selon l'invention permet de rendre compte de données ambigües, comme par exemple les 0 se rapprochant des 6 (en haut au centre), un 9 qui pourrait tout aussi bien être un 3 ou un 8 (au centre), etc.

La présente invention présente encore l'avantage de ne pas faire l'hypothèse que l'espace des données est euclidien, n'importe quelle distance dans cet espace ou même n'importe quelle dissimilarité pouvant être utilisée. De plus, elle ne nécessite pas de choisir un noyau et ne fait aucune hypothèse d'un modèle implicite aux données. A la différence des méthodes supervisées de l'état de l'art, elle n'altère pas les distances d'origine; elle est compatible avec les méthodes d'évaluation des méthodes de réduction de dimension du type des diagrammes de Shepard et elle rencontre moins de difficulté à positionner de nouvelles données *a posteriori*. Enfin, le système fournissant la carte de données illustrée par la figure 3 peut être implémenté sur la plupart des ordinateurs munis d'un dispositif d'affichage graphique.

La présente invention présente donc un intérêt considérable dans le domaine de l'aide à la décision en discrimination, où une présentation intuitive de l'organisation des données se révèle très utile. L'invention permet dans un premier temps de construire une carte à partir d'un ensemble de données d'apprentissage. Puis, dans un deuxième temps, des données de test non-étiquetées peuvent être présentées. Situer ces données de test sur la carte peut se faire de plusieurs manières. Il est possible de les positionner *a posteriori*, mais on observe que cela peut être plus où moins efficace suivant les jeux de données. En conséquence, il est plutôt conseillé de présenter les distances entre données d'apprentissage et données de test par une autre méthode, pour laquelle la demanderesse a également déposé une demande de brevet.

L'exemple précédent des imagettes n'est donné qu'à titre d'illustration. En effet, la présente invention est également applicable à toutes sortes de données, notamment des données numérisées. Ces données numérisées peuvent inclure des mesures de caractéristiques physiques prises sur des objets très variés autres que des photos, qu'il s'agisse d'objets matériels, d'individus, d'états d'un système, ou encore d'un groupe de tels objets, individus ou états, dont on mesure des caractéristiques physiques.

Naturellement, ces données numérisées peuvent inclure des scalaires, c'est-à-dire des nombres réels, comme des mesures fournies par un capteur.

Mais ces données numérisées peuvent également inclure des symboles (élément d'un alphabet) comme une valeur élément d'un ensemble fini (lettre d'un mot, nom d'un objet, etc).

Ces données numérisées peuvent également inclure des vecteurs, comme une mesure d'un capteur accompagnée de son incertitude ou un ensemble de mesures issues d'un réseau de capteurs ou un signal (séquence de mesures, flux, etc) ou un ensemble de valeurs issues d'une base de données ou un mot, une phrase, un texte ou un ensemble de mesures normalisées (proportions) ou encore tout ensemble de données scalaires ou symboliques.

Ces données numérisées peuvent également inclure des matrices, comme une image plane en noir et blanc ou un ensemble de signaux issus d'un réseau de capteurs ou des données génétiques ou encore tout ensemble de données vectorielles.

Ces données numérisées peuvent également inclure des tableaux multi-dimensionnels, comme une séquence d'images (vidéo) ou une image multi-spectrale (image satellite) ou une image couleur (photographie, résultat de simulations) ou une image 3D (scanner) ou un maillage multidimensionnel (modèle de simulation) ou encore tout ensemble de données matricielles ou de tableaux multi-dimensionnels de dimension inférieure.

Ces données numérisées peuvent également inclure des graphes et des réseaux, comme un réseau social ou le réseau internet ou un réseau de transport (traffic routier, information, énergie, etc) ou un réseau d'interactions (protéines, gènes) ou un réseau de capteurs ou un maillage de modélisation numérique (modélisation 2D, 3D, 3D avec le temps, etc).

Ces données numérisées peuvent également inclure des complexes cellulaires ou des hypergraphes, comme un maillage de modélisation numérique (objets virtuels, modélisation multi-physique, films d'animation) ou des modèles biologiques ou moléculaires ou physiques ou climatiques ou mécaniques ou encore chimiques.

Ces données numérisées peuvent également inclure des données complexes comme des documents multimédias (ensemble organisé de textes, vidéos, signaux audio, etc) ou une collection de documents ou encore tout ensemble de documents organisés (bibliothèque).

## Revendications

1.  Méthode de réduction de dimension non-linéaire et supervisée d'un jeu de données d'apprentissage provenant de mesures de caractéristiques physiques d'un espace d'origine de dimension N où N ≥ 3 vers un espace métrique de représentation de dimension inférieure ou égale à N, la méthode étant implémentée dans un système informatique, **caractérisé en ce que** la méthode comprend une étape d'estimation de la classe d'une donnée de test numérisée, dans l'espace métrique d'origine, chaque donnée de test appartenant à au moins une classe regroupant plusieurs données, l'étape d'estimation comprenant:

    - une étape de projection des données du jeu d'apprentissage vers l'espace métrique de représentation, ladite étape de projection comprenant la détermination des positions de projections des données du jeu d'apprentissage dans l'espace de représentation qui minimisent ou maximisent une fonction de stress $E$, la fonction de stress $E$ étant la somme de stress locaux $Eij$, chaque stress local $Eij$ étant lié à deux données $i$ et $j$ du jeu d'apprentissage de l'espace d'origine, et étant défini comme le produit d'une fonction $F\left(d_{ij}, d_{ij}^{*}\right)$ et d'une fonction de pondération $G\left(d_{ij}, d_{ij}^{*}\right)$, lesdites fonctions $F$ et $G$ dépendant de la distance $d_{ij}$, représentant la dissimilarité considérée entre les données $i$ et $j$ dans l'espace d'origine, et de la distance $d_{ij}^{*}$, désignant la distance entre les projections des deux données $i$ et $j$ dans l'espace de représentation, la fonction $F$ quantifiant la différence entre les distances $d_{ij}^{*}$ et $d_{ij}$, la fonction $G$ dépendant en outre du niveau d'appartenance conjointe à une classe $C_{ij}$ associé aux données $i$ et $j$ , le niveau d'appartenance conjointe à une classe $C_{ij}$ indiquant si

deux données quelconques du jeu d'apprentissage appartiennent à une même classe:

$$E_{ij} = F(d_{ij}, d_{ij}^*) \times G(d_{ij}, d_{ij}^*);$$

- une étape de représentation des projections des données du jeu d'apprentissage vers l'espace métrique de représentation, en utilisant les positions de projections ;
- une étape de mise en relation de la donnée de test avec les projections des données du jeu d'apprentissage,
- une étape de détermination de la classe des projections des données du jeu d'apprentissage qui est en relation avec la donnée de test, ce qui fournit la classe la plus probable de la donnée de test.

2. Méthode selon la revendication 1, **caractérisée en ce que** les données numérisées incluent une ou plusieurs mesures de caractéristiques physiques d'un objet.

3. Méthode selon la revendication 2, **caractérisée en ce que** l'objet est :

- un objet matériel ou un groupe d'objets matériels, ou;
- un individu ou un groupe d'individus, ou;
- un état d'un système ou un groupe d'états d'un système.

4. Méthode selon l'une des revendications précédentes, **caractérisée en ce que** l'organisation spatiale relative des classes est préservée dans l'espace de représentation et en **en ce que** deux classes distinctes de données du jeu d'apprentissage ont les projections de leurs données rassemblées dans deux zones connexes disjointes respectivement, si les données de ces deux classes sont elles-mêmes rassemblées dans deux zones connexes disjointes de l'espace d'origine.

5. Méthode selon la revendication 4, **caractérisée en ce que** l'étape de mise en relation comporte une étape de projection de la donnée de test dans l'espace de représentation, la classe la plus probable de la donnée de test étant la classe correspondant à la zone connexe dans laquelle se trouve la projection de la donnée de test.

6. Méthode selon l'une des revendications précédentes, **caractérisée en ce que** l'espace métrique d'origine est de dimension N≥3 et l'espace métrique de représentation est de dimension 2 ou 3.

7. Méthode selon l'une des revendications précédentes, **caractérisée en ce que** les projections des données du jeu d'apprentissage sont représentées dans un repère orthonormé de l'espace métrique de représentation.

8. Méthode selon l'une des revendications précédentes, **caractérisée en ce que** la distance $d_{ij}^*$ entre les projections des deux données $i$ et $j$ du jeu d'apprentissage dans l'espace de représentation est telle qu'elle minimise la fonction de stress $E$, et **en ce que** la fonction de pondération- $G$ une fonction de pondération telle que :

$$G(d_{ij}, d_{ij}^*) = \varphi(G^{\mathrm{intra}}(d_{ij}, d_{ij}^*), G^{\mathrm{inter}}(d_{ij}, d_{ij}^*), C_{ij}),$$

où:

- $C_{ij}$ est le niveau d'appartenance conjointe à valeur dans un intervalle réel;
- $G^{\mathrm{intra}}$ et $G^{\mathrm{inter}}$ sont des fonctions de pondération;
- $\varphi$ est une fonction telle qu'il existe au moins une valeur de $C_{ij}$ pour laquelle $G = G^{\mathrm{intra}}$ et au moins une valeur de $C_{ij}$ pour laquelle $G = G^{\mathrm{inter}}$.

9. Méthode selon la revendication 8, **caractérisée en ce que** le niveau d'appartenance conjointe est à valeur dans {0,1}, valant 1 si $i$ et $j$ appartiennent à une même classe et valant 0 sinon.

10. Méthode selon la revendication 8, **caractérisée en ce que**:

- $F(d_{ij}, d_{ij}^*) = |d_{ij} - d_{ij}^*|^2;$
- $G^{\mathrm{intra}}(d_{ij}, d_{ij}^*) = g(d_{ij})$ et $G^{\mathrm{inter}}(d_{ij}, d_{ij}^*) = g(d_{ij}^*)$, où $g$ est la fonction sigmoïde inversée de paramètre λ.

11. Méthode selon l'une quelconque des revendications précédentes, **caractérisée en ce que** les données sont des caractères manuscrits numérisés, les classes regroupant les caractères identiques.

12. Méthode selon l'une quelconque des revendications précédentes, **caractérisée en ce que** les données sont des courbes sismiques numérisées, une classe regroupant les courbes dont l'enregistrement correspond à un tremblement de terre et une autre classe regroupant les courbes dont l'enregistrement ne correspond pas à un tremblement de terre.

13. Méthode selon l'une quelconque des revendications précédentes, **caractérisée en ce que** les données sont des photographies numériques de mélanomes, une classe regroupant les photographies de mélanomes malins et une autre classe regroupant les photographies de mélanomes bénins.

14. Système de réduction de dimension non-linéaire et supervisée d'un jeu de données d'apprentissage provenant de mesures de caractéristiques physiques d'un espace d'origine de dimension N où $N \geq 3$ vers un espace métrique de représentation de dimension inférieure ou égale à N, le système étant implémenté dans un système informatique, **caractérisé en ce que** le système est configuré pour estimer la classe d'une donnée de test numérisée, dans un espace métrique d'origine, chaque donnée de test appartenant à au moins une classe regroupant plusieurs données, le système comprenant:

- un module de projection des données du jeu d'apprentissage vers l'espace métrique de représentation, le module de projection étant configuré pour déterminer les positions de projections des données du jeu d'apprentissage dans l'espace métrique de représentation qui minimisent ou maximisent une fonction de stress $E$, la fonction de stress $E$ étant la somme de stress locaux $Eij$, chaque stress local $Eij$ étant lié à deux données $i$ et $j$ du jeu d'apprentissage de l'espace d'origine, et étant défini comme le produit d'une fonction $F\left(d_{ij}, d_{ij}^{*}\right)$ et d'une fonction de pondération $G\left(d_{ij}, d_{ij}^{*}\right)$, lesdites fonctions F et $G$ dépendant de la distance $d_{ij}$, représentant la dissimilarité considérée entre les données $i$ et $j$ dans l'espace d'origine, et de la distance $d_{ij}^{*}$, désignant la distance entre les projections des deux données $i$ et $j$ dans l'espace de représentation, la fonction $F$ quantifiant la différence entre les distances $d_{ij}^{*}$ et $d_{ij}$, la fonction $G$ dépendant en outre du niveau d'appartenance conjointe à une classe $C_{ij}$ associé aux données $i$ et $j$ , , le niveau d'appartenance conjointe à une classe $C_{ij}$ indiquant si deux données quelconques du jeu d'apprentissage appartiennent à une même classe:

$$E_{ij} = F(d_{ij}, d_{ij}^{*}) \times G(d_{ij}, d_{ij}^{*});$$

- un module de représentation des projections des données du jeu d'apprentissage vers l'espace métrique de représentation, en utilisant les positions de projections ;
- un module de mise en relation de la donnée de test avec les projections des données du jeu d'apprentissage,
- une étape de détermination de la la classe des projections des données du jeu d'apprentissage en relation avec la donnée de test, ce qui fournit la classe la plus probable de la donnée de test.

15. Système selon la revendication 14, **caractérisé en ce que** les données numérisées incluent une ou plusieurs mesures de caractéristiques physiques d'un objet.

16. Système selon l'une des revendications 14 et 15, **caractérisé en ce que** l'objet est :

- un objet matériel ou un groupe d'objets matériels, ou;
- un individu ou un groupe d'individus, ou;
- un état d'un système ou un groupe d'états d'un système.

17. système selon l'une des revendications 14 à 16, **caractérisé en ce que** l'organisation spatiale relative des classes est préservée dans l'espace de représentation **en ce que** deux classes distinctes de données du jeu d'apprentissage ont les projections de leurs données rassemblées dans deux zones connexes disjointes respectivement, si les données de ces deux classes sont elles-mêmes rassemblées dans deux zones connexes disjointes de l'espace d'origine.

18. Système selon la revendication 17, **caractérisé en ce que** le module de mise en relation comporte un module de projection de la donnée de test dans l'espace de représentation, la classe la plus probable de la donnée de test étant la classe correspondant à la zone connexe dans laquelle se trouve la projection de la donnée de test.

19. Système selon selon l'une des revendications 14 à 18, **caractérisé en ce que** l'espace métrique d'origine est de dimension N≥3 et l'espace métrique de représentation est de dimension 2 ou 3.

20. Système selon selon l'une des revendications 14 à 19, **caractérisé en ce que** les projections des données du jeu d'apprentissage sont représentées dans un repère orthonormé de l'espace métrique de représentation.

21. système selon l'une des revendications 14 à 20, **caractérisé en ce qu'**une distance $d_{ij}^{*}$ dans l'espace de représentation entre les projections de deux données $i$ et $j$ quelconques du jeu d'apprentissage est la distance qui minimise une fonction de stress $E = \sum_{ij} E_{ij}$, où $E_{ij}$ est une fonction de stress local dépendant de la distance entre les données $i$ et $j$, telle que $E_{ij} = F(d_{ij}, d_{ij}^{*}) \times G(d_{ij}, d_{ij}^{*})$, où:

   - $d_{ij}$ est une mesure de dissimilarité entre les données $i$ et $j$, dans l'espace d'origine et $d_{ij}^{*}$ est la distance entre les projections des données i et j dans l'espace de représentation;

   - $F$ est une fonction qui quantifie la différence entre $d_{ij}$ et $d_{ij}^{*}$, F étant minimum quand $d_{ij} = d_{ij}^{*}$;

   - $G$ est une fonction de pondération telle que :

   $$G(d_{ij}, d_{ij}^{*}) = \varphi(G^{\mathrm{intra}}(d_{ij}, d_{ij}^{*}), G^{\mathrm{inter}}(d_{ij}, d_{ij}^{*}), C_{ij}),$$ où:

      - $C_{ij}$ est le niveau d'appartenance conjointe à valeur dans un intervalle réel;
      - $G^{intra}$ et $G^{inter}$ sont des fonctions de pondération;
      - $\varphi$ est une fonction telle qu'il existe au moins une valeur de $C_{ij}$ pour laquelle $G = G^{\mathrm{intra}}$ et au moins une valeur de $C_{ij}$ pour laquelle $G = G^{\mathrm{inter}}$.

22. Système selon la revendication 21, **caractérisé en ce que** le niveau d'appartenance conjointe est à valeur dans {0,1}, valant 1 si $i$ et $j$ appartiennent à une même classe et valant 0 sinon.

23. Système selon la revendication 22, **caractérisé en ce que**:

   - $F(d_{ij}, d_{ij}^{*}) = |d_{ij} - d_{ij}^{*}|^{2}$;

   - $G^{\mathrm{intra}}(d_{ij}, d_{ij}^{*}) = g(d_{ij})$ et $G^{\mathrm{inter}}(d_{ij}, d_{ij}^{*}) = g(d_{ij}^{*})$, où $g$ est la fonction sigmoïde inversée de paramètre λ.

24. Système selon l'une quelconque des revendications 14 à 23, **caractérisé en ce que** les données sont des caractères manuscrits numérisés, les classes regroupant les caractères identiques.

25. Système selon l'une quelconque des revendications 14 à 23, **caractérisé en ce que** les données sont des courbes sismiques numérisées, une classe regroupant les courbes dont l'enregistrement correspond à un tremblement de terre et une autre classe regroupant les courbes dont l'enregistrement ne correspond pas à un tremblement de terre.

26. Système selon l'une quelconque des revendications 14 à 23, **caractérisé en ce que** les données sont des photographies numériques de mélanomes, une classe regroupant les photographies de mélanomes malins et une autre classe regroupant les photographies de mélanomes bénins.

**Patentansprüche**

1. Verfahren zur nichtlinearen und überwachten Dimensionsreduzierung eines Lerndatensatzes, der aus Messungen physikalischer Eigenschaften eines Ursprungsraums der Dimension N stammt, in dem N ≥ 3 zu einem metrischen Raum der Abmessungsdarstellung kleiner oder gleich N ist, wobei das Verfahren in einem Computersystem umgesetzt wird, **dadurch gekennzeichnet, dass** das Verfahren einen Abschätzungsschritt der Klasse eines digitalisierten Testdatenelements umfasst, wobei in dem metrischen Ursprungsraum jedes Testdatenelement mindestens einer Klasse angehört, die mehrere Daten zusammenfasst, wobei der Abschätzungsschritt umfasst:

- einen Projektionsschritt der Daten des Lernsatzes zu dem metrischen Darstellungsraum, wobei der Projektionsschritt das Bestimmen der Projektionspositionen der Daten des Lernsatzes in dem Darstellungsraum umfasst, die eine Spannungsfunktion $E$ minimieren oder maximieren, wobei die Spannungsfunktion $E$ die Summe der lokalen Spannungen $E_{ij}$ ist, wobei jede lokale Spannung $E_{ij}$ mit zwei Daten $i$ und $j$ des Lernsatzes des Ursprungsraums verknüpft wird und als das Produkt einer Funktion $F\left(d_{ij}, d_{ij}^{*}\right)$ und einer Gewichtungsfunktion $G\left(d_{ij}, d_{ij}^{*}\right)$ definiert wird, wobei die Funktionen $F$ und $G$ von dem Abstand $d_{ij}$ abhängen, der die betrachtete Ungleichartigkeit zwischen den Daten $i$ und $j$ im Ursprungsraum und dem Abstand $d_{ij}^{*}$ darstellt, wobei der Abstand zwischen den Projektionen der beiden Daten $i$ und $j$ im Darstellungsraum bezeichnet wird, wobei die Funktion F die Differenz zwischen den Abständen $d_{ij}^{*}$ und $d_{ij}$ quantifiziert, wobei die Funktion $G$ auch von der Stufe der gemeinsamen Zugehörigkeit zu einer $C_{ij}$-Klasse abhängig ist, die den Daten $i$ und $j$ zugeordnet wird, wobei die Stufe der gemeinsamen Zugehörigkeit zu einer $C_{ij}$-Klasse angibt, ob zwei beliebige Daten des Lernsatzes einer selben Klasse angehören:

$$E_{ij} = F\left(d_{ij}, d_{ij}^{*}\right) \times G\left(d_{ij}, d_{ij}^{*}\right);$$

- einen Schritt der Projektionsdarstellungen der Daten des Lernsatzes zu dem metrischen Darstellungsraum durch Verwenden der Projektionspositionen;
- einen Schritt des Verknüpfens des Testdatenelements mit den Projektionen der Daten des Lernsatzes,
- einen Bestimmungsschritt der Klasse der Projektionen der Daten des Lernsatzes, die mit dem Testdatenelement verknüpft sind, was die wahrscheinlichste Klasse des Testdatenelements liefert.

2. Verfahren nach Anspruch 1, **dadurch gekennzeichnet, dass** die digitalisierten Daten eine oder mehrere Messungen der physikalischen Eigenschaften eines Objekts einschließen.

3. Verfahren nach Anspruch 2, **dadurch gekennzeichnet, dass** das Objekt:

- ein materielles Objekt oder eine Gruppe materieller Objekte oder;
- eine Person oder eine Gruppe von Personen oder;
- ein Systemzustand oder eine Gruppe von Systemzuständen ist.

4. Verfahren nach einem der vorhergehenden Ansprüche, **dadurch gekennzeichnet, dass** die relative räumliche Organisation der Klassen in dem Darstellungsraum erhalten bleibt und dass zwei verschiedene Klassen der Daten des Lernsatzes die Projektionen ihrer gesammelten Daten in jeweils zwei elementfremden zusammenhängenden Bereichen haben, wenn die Daten dieser beiden Klassen selbst in zwei elementfremden zusammenhängenden Bereichen des Ursprungsraums gesammelt werden.

5. Verfahren nach Anspruch 4, **dadurch gekennzeichnet, dass** der Verknüpfungsschritt einen Projektionsschritt des Testdatenelements in dem Darstellungsraum aufweist, wobei die wahrscheinlichste Klasse des Testdatenelements die Klasse ist, die dem zusammenhängenden Bereich entspricht, in dem sich die Projektion des Testdatenelements befindet.

6. Verfahren nach einem der vorhergehenden Ansprüche, **dadurch gekennzeichnet, dass** der metrische Ursprungsraum von der Dimension N $\geq$ 3 ist und der metrische Darstellungsraum von der Dimension 2 oder 3 ist.

7. Verfahren nach einem der vorhergehenden Ansprüche, **dadurch gekennzeichnet, dass** die Projektionen der Daten des Lernsatzes in einer orthonormierten Marke des metrischen Darstellungsraums dargestellt werden.

8. Verfahren nach einem der vorhergehenden Ansprüche, **dadurch gekennzeichnet, dass** der Abstand $d_{ij}^{*}$ zwischen den Projektionen der beiden Daten *i* und *j* des Lernsatzes in dem Darstellungsraum derart ist, dass er die Spannungsfunktion E minimiert, und dass die Gewichtsfunktion- G eine Gewichtsfunktion derart ist, dass:

$$G\big(d_{ij}, d_{ij}^*\big) = \varphi\big(G^{\mathrm{intra}}\big(d_{ij}, d_{ij}^*\big), G^{\mathrm{inter}}\big(d_{ij}, d_{ij}^*\big), C_{ij}\big),$$

wobei:

- $C_{ij}$ die Stufe der gemeinsamen Zugehörigkeit zum Wert in einem tatsächlichen Intervall ist;
- $G^{\mathrm{intra}}$ und $G^{\mathrm{inter}}$ Gewichtsfunktionen sind;
- $\varphi$ eine derartige Funktion ist, dass es mindestens einen Wert von $C_{ij}$, für den $G = G^{\mathrm{intra}}$ ist und mindestens einen Wert von $C_{ij}$ gibt, für den $G = G^{\mathrm{inter}}$ ist.

9. Verfahren nach Anspruch 8, **dadurch gekennzeichnet, dass** die Stufe der gemeinsamen Zugehörigkeit der Wert in {0,1} ist, wobei 1 gilt, wenn *i* und *j* einer selben Klasse angehören und andernfalls 0 gilt.

10. Verfahren nach Anspruch 8, **dadurch gekennzeichnet, dass**:
- $F\big(d_{ij}, d_{ij}^*\big) = \big|d_{ij}, d_{ij}^*\big|^2$;
- $G^{\mathrm{intra}}\big(d_{ij}, d_{ij}^*\big) = g\big(d_{ij}\big)$ und $G^{\mathrm{inter}}\big(d_{ij}, d_{ij}^*\big) = g\big(d_{ij}\big)$, wobei *g* die invertierte sigmoide Funktion des Parameters λ ist.

11. Verfahren nach einem der vorhergehenden Ansprüche, **dadurch gekennzeichnet, dass** die Daten digitalisierte handschriftliche Zeichen sind, wobei die Klassen die identischen Zeichen zusammenfassen.

12. Verfahren nach einem der vorhergehenden Ansprüche, **dadurch gekennzeichnet, dass** die Daten digitalisierte seismische Kurven sind, wobei eine Klasse die Kurven zusammenfasst, deren Aufzeichnung einem Erdbeben entspricht und eine andere Klasse die Kurven zusammenfasst, deren Aufzeichnung keinem Erdbeben entspricht.

13. Verfahren nach einem der vorhergehenden Ansprüche, **dadurch gekennzeichnet, dass** die Daten Digitalphotographien von Melanomen sind, wobei eine Klasse die Photographien von malignen Melanomen zusammenfasst und eine andere Klasse die Photographien von gutartigen Melanomen zusammenfasst.

14. System zur nichtlinearen und überwachten Dimensionsreduzierung eines Lerndatensatzes, der aus Messungen physikalischer Eigenschaften eines Ursprungsraums der Dimension N stammt, in dem N ≥ 3 zu einem metrischen Raum der Abmessungsdarstellung kleiner oder gleich N ist, wobei das System in einem Computersystem ausgeführt wird, **dadurch gekennzeichnet, dass** das System konfiguriert wird, um die Klasse eines digitalisierten Testdatenelements in einem metrischen Ursprungsraum zu schätzen, wobei jedes Testdatenelement mindestens einer Klasse angehört, die mehrere Daten zusammenfasst, wobei das System umfasst:

- ein Projektionsmodul der Daten des Lernsatzes zu dem metrischen Darstellungsraum, wobei das Projektionsmodul konfiguriert wird, um die Projektionspositionen der Daten des Lernsatzes in dem metrischen Darstellungsraum zu bestimmen, die eine Spannungsfunktion *E* minimieren oder maximieren, wobei die Spannungsfunktion *E* die Summe der lokalen Spannungen *Eij* ist, wobei jede lokale Spannung *Eij* mit zwei Daten *i* und *j* des Lernsatzes des Ursprungsraums verknüpft wird und als das Produkt einer Funktion $F\big(d_{ij}, d_{ij}^*\big)$ und einer Gewichtungsfunktion $G\big(d_{ij}, d_{ij}^*\big)$ definiert wird, wobei die Funktionen *F* und *G* von dem Abstand $d_{ij}$ abhängen, der die betrachtete Ungleichartigkeit zwischen den Daten *i* und *j* im Ursprungsraum und dem Abstand $d_{ij}^*$ darstellt, wobei der Abstand zwischen den Projektionen der beiden Daten *i* und *j* im Darstellungsraum bezeichnet wird, wobei die Funktion *F* die Differenz zwischen den Abständen $d_{ij}^*$ und $d_{ij}$ quantifiziert, wobei die Funktion *G* auch von der Stufe der gemeinsamen Zugehörigkeit zu einer $C_{ij}$-Klasse abhängig ist, die den Daten *i* und *j* zugeordnet wird, wobei die Stufe der gemeinsamen Zugehörigkeit zu einer *Cij*-Klasse angibt, ob zwei beliebige Daten des Lernsatzes einer selben Klasse angehören:

$$E_{ij} = F\big(d_{ij}, d_{ij}^*\big) \times G\big(d_{ij}, d_{ij}^*\big);$$

- ein Modul der Projektionsdarstellungen der Daten des Lernsatzes zu dem metrischen Darstellungsraum durch Verwenden der Projektionspositionen;
- ein Verknüpfungsmodul des Testdatenelements mit den Projektionen der Daten des Lernsatzes,
- einen Bestimmungsschritt der Klasse der Projektionen der Daten des mit dem Testdatenelement verknüpften Lernsatzes, was die wahrscheinlichste Klasse des Testdatenelements liefert.

15. System nach Anspruch 14, **dadurch gekennzeichnet, dass** die digitalisierten Daten eine oder mehrere Messungen von physikalischen Eigenschaften eines Objekts einschließen.

16. System nach einem der Ansprüche 14 und 15, **dadurch gekennzeichnet, dass** das Objekt:

- ein materielles Objekt oder eine Gruppe materieller Objekte oder;
- eine Person oder eine Gruppe von Personen oder;
- ein Systemzustand oder eine Gruppe von Systemzuständen ist.

17. System nach einem der Ansprüche 14 bis 16, **dadurch gekennzeichnet, dass** die relative räumliche Organisation der Klassen in dem Darstellungsraum dadurch erhalten bleibt, dass zwei verschiedene Klassen der Daten des Lernsatzes die Projektionen ihrer gesammelten Daten in jeweils zwei elementfremden zusammenhängenden Bereichen haben, wenn die Daten dieser beiden Klassen selbst in zwei elementfremden zusammenhängenden Bereichen des Ursprungsraums gesammelt werden.

18. System nach Anspruch 17, **dadurch gekennzeichnet, dass** das Verknüpfungsmodul ein Projektionsmodul des Testdatenelements in dem Darstellungsraum aufweist, wobei die wahrscheinlichste Klasse des Testdatenelements die Klasse ist, die dem zusammenhängenden Bereich entspricht, in dem sich die Projektion des Testdatenelements befindet.

19. System nach einem der Ansprüche 14 bis 18, **dadurch gekennzeichnet, dass** der metrische Ursprungsraum von der Dimension N ≥ 3 ist und der metrische Darstellungsraum von der Dimension 2 oder 3 ist.

20. System nach einem der Ansprüche 14 bis 19, **dadurch gekennzeichnet, dass** die Projektionen der Daten des Lernsatzes in einem orthonormierten Achsenkreuz des metrischen Darstellungsraums dargestellt werden.

21. System nach einem der Ansprüche 14 bis 20, **dadurch gekennzeichnet, dass** ein Abstand $d_{ij}^*$ in dem Darstellungsraum zwischen den Projektionen der beliebigen zwei Daten $i$ und $j$ des Lernsatzes der Abstand ist, der eine Spannungsfunktion $E = \sum_{i,j} E_{ij}$ minimiert, wobei $E_{ij}$ eine räumliche Spannungsfunktion ist, die von dem Abstand zwischen den Daten $i$ und $j$ derart abhängt, dass $E_{ij} = F\big(d_{ij}, d_{ij}^*\big) \times G\big(d_{ij}, d_{ij}^*\big)$, wobei:

- $d_{ij}$ ein Maß der Ungleichartigkeit zwischen den Daten $i$ und $j$ in dem Ursprungsraum ist und $d_{ij}^*$ der Abstand zwischen den Projektionen der Daten i und j in dem Darstellungsraum ist;
- $F$ eine Funktion ist, die die Differenz zwischen $d_{ij}$ und $d_{ij}^*$ quantifiziert, wobei F ein Minimum ist, wenn $d_{ij} = d_{ij}^*$ ist;
- $G$ eine Gewichtsfunktion derart ist, dass:

$$G\big(d_{ij}, d_{ij}^*\big) = \varphi\big(G^{\mathrm{intra}}\big(d_{ij}, d_{ij}^*\big), G^{\mathrm{inter}}\big(d_{ij}, d_{ij}^*\big), C_{ij}\big),$$

wobei:

- $C_{ij}$ die Stufe der gemeinsamen Zugehörigkeit zum Wert in einem tatsächlichen Intervall ist;
- $G^{intra}$ und $G^{inter}$ Gewichtsfunktionen sind;
- $\varphi$ eine derartige Funktion ist, dass es mindestens einen Wert von $C_{ij}$, für den $G = G^{intra}$ ist und mindestens einen Wert von *Cij* gibt, für den $G = G^{inter}$ ist.

**22.** System nach Anspruch 21, **dadurch gekennzeichnet, dass** die Stufe der gemeinsamen Zugehörigkeit der Wert in {0,1} ist, wobei 1 gilt, wenn *i* und *j* einer selben Klasse angehören und andernfalls 0 gilt.

**23.** System nach Anspruch 22, **dadurch gekennzeichnet, dass**:

$$- F\left(d_{ij}, d_{ij}^*\right) = \left|d_{ij}, d_{ij}^*\right|^2 ;$$

$$- G^{intra}\left(d_{ij}, d_{ij}^*\right) = g\left(d_{ij}\right) \text{ und } G^{inter}\left(d_{ij}, d_{ij}^*\right) = g\left(d_{ij}\right),$$ wobei g die invertierte sigmoide Funktion des Parameters λ ist.

**24.** System nach einem der Ansprüche 14 bis 23, **dadurch gekennzeichnet, dass** die Daten digitalisierte handschriftliche Zeichen sind, wobei die Klassen die identischen Zeichen zusammenfassen.

**25.** System nach einem der Ansprüche 14 bis 23, **dadurch gekennzeichnet, dass** die Daten digitalisierte seismische Kurven sind, wobei eine Klasse die Kurven zusammenfasst, deren Aufzeichnung einem Erdbeben entspricht und eine andere Klasse die Kurven zusammenfasst, deren Aufzeichnung keinem Erdbeben entspricht.

**26.** System nach einem der Ansprüche 14 bis 23, **dadurch gekennzeichnet, dass** die Daten Digitalphotographien von Melanomen sind, wobei eine Klasse die Photographien von malignen Melanomen zusammenfasst und eine andere Klasse die Photographien von gutartigen Melanomen zusammenfasst.

**Claims**

**1.** Method for supervised and non-linear dimension reduction of a set of learning data originating from measurements of physical characteristics of an original space of the dimension N, where N ≥ 3 towards a metric representation space having a dimension less than or equal to N, the method being implemented in a data-processing system, **characterised in that** the method comprises a step of estimating the class of a digitised test datum, in the original metric space, each test datum membership to at least one class grouping a plurality of data, the estimation step comprising:

- a step of projecting data of the learning set towards the metric representation space, the projection step involving determining the projection positions of the data of the learning set in the representation space which minimise or maximise a stress function E, the stress function *E* being the sum of local stresses *Eij*, each local stress *Eij* being related to two data *i* and *j* of the learning set of the original space, and being defined as being the product of a function *F(d_{ij}, d\*_{ij})* and a weighting function *G(d_{ij}, d\*_{ij})*, the functions *F* and *G* depending on the distance $d_{ij}$ representing the dissimilarity considered between the data *i* and *j* in the original space and the distance $d^*_{ij}$ designating the distance between the projections of the two data *i* and *j* in the representation space, the function F quantifying the difference between the distances $d^*_{ij}$ and $d_{ij}$, the function G further depending on the level of conjoint membership to a class $C_{ij}$ associated with the data *i* and *j*, the level of conjoint membership to a class $C_{ij}$ indicating whether any two data of the learning set belong to the same class:

$$E_{ij} = F(d_{ij},\, d^*_{ij}) \; x \; G\,(d_{ij},\, d^*_{ij});$$

- a step of representing projections of the learning set data towards the metric representation space, using the projection positions;
- a step of relating the test datum to the projections of the learning set data,
- a step of determining the class of the projections of the learning set data which is related to the test datum, which provides the most probable class of the test datum.

**2.** Method according to claim 1, **characterised in that** the digitised data include one or more measurements of physical characteristics of an object.

**3.** Method according to claim 2, **characterised in that** the object is:

- a material object or a group of material objects, or;
- a person or a group of persons, or;
- a state of a system or a group of states of a system.

4. Method according to any one of the preceding claims, **characterised in that** the relative spatial organisation of the classes is preserved in the representation space and **in that** two separate classes of data from the learning set have the projections of their data assembled in two respectively separate connected zones, if the data of these two classes are themselves assembled in two separate connected zones of the original space.

5. Method according to claim 4, **characterised in that** the relating step comprises a step of projecting the test datum into the representation space, the most probable class of the test datum being the class which corresponds to the connected zone in which the projection of the test datum is located.

6. Method according to any one of the preceding claims, **characterised in that** the original metric space has a dimension $N \geq 3$ and the metric representation space has a dimension 2 or 3.

7. Method according to any one of the preceding claims, **characterised in that** the projections of the learning set data are represented in an orthonormal reference system of the metric representation space.

8. Method according to any one of the preceding claims, **characterised in that** the distance $d^*_{ij}$ between the projections of the two data $i$ and $j$ of the learning set into the representation space is such that it minimises the stress function E, and **in that** the weighting function G a weighting function such that:

$$G\,(d_{ij},\,d^*_{ij}) = \varphi(G^{intra}\,(d_{ij},\,d^*_{ij}),\,G^{inter}\,(d_{ij},\,d^*_{ij}),\,C_{ij}),$$

where:

- $C_{ij}$ is the conjoint membership level having a value in a real range,
- $G^{intra}$ and $G^{inter}$ are weighting functions;
- $\varphi$ is a function such that there exists at least one value of $C_{ij}$ for which $G = G^{intra}$ and at least one value of $C_{ij}$ for which $G = G^{inter}$.

9. Method according to claim 8, **characterised in that** the conjoint membership level has a value in {0, 1}, having the value 1 if $i$ and $j$ belong to the same class and having a value 0 otherwise.

10. Method according to claim 8, **characterised in that**:

-

$$- \mathrm{F}(d_{ij},\,d^*_{ij}) = \left| d_{ij} - d^*_{ij} \right|^{2};$$

- $G^{intra}\,(_{dij},\,d^*_{ij}) = g(d_{ij})$ and $G^{inter}\,(d_{ij},\,d^*_{ij}) = g(d^*_{ij})$, where g is the inverse sigmoid function with the parameter $\lambda$.

11. Method according to any one of the preceding claims, **characterised in that** the data are digitised handwritten characters, the classes grouping identical characters.

12. Method according to any one of the preceding claims, **characterised in that** the data are digitised seismic curves, one class grouping curves of which the recording corresponds to an earth tremor and another class grouping curves whose recording does not correspond to an earth tremor.

13. Method according to any one of the preceding claims, **characterised in that** the data are digital photographs of melanomas, one class grouping photographs of malignant melanomas and another class grouping photographs of benign melanomas.

14. System for supervised and non-linear dimension reduction of a set of learning data originating from measurements of physical characteristics of an original space of the dimension N, where N $\geq$ 3 towards a metric representation space having a dimension less than or equal to N, the system being implemented in a data processing system, **characterised in that** the system is configured for estimating the class of a digitised test datum, in an original metric space, each test datum membership to at least one class grouping a plurality of data, the system comprising:

- a module for projecting data of the learning set towards the metric representation space, the projection module being configured to determine the projection positions of the data of the learning set in the metric representation space which minimise or maximise a stress function $E$, the stress function $E$ being the sum of local stresses $Eij$, each local stress E$ij$ being related to two data $i$ and $j$ of the learning set of the original space, and being defined as the product of a function $F (d_{ij}, d^*_{ij})$ and a weighting function $G (d_{ij}, d^*_{ij})$, the functions $F$ and $G$ depending on the distance $d_{ij}$, representing the dissimilarity considered between the data $i$ and $j$ in the original space, and the distance $d^*_{ij}$ indicating the distance between the projections of the two data $i$ and $j$ in the representation space, the function $F$ quantifying the difference between the distances $d^*_{ij}$ and $d_{ij}$, the function $G$ further depending on the level of conjoint membership to a class $C_{ij}$ which is associated with the data $i$ and $j$, the level of conjoint membership to a class $C_{ij}$ indicating whether any two data of the learning set belong to the same class:

$$E_{ij} = F(d_{ij}, d^*_{ij}) \times G (D_{ij}, d^*_{ij});$$

- a module for representing projections of the learning set data towards the metric representation space, using the projection positions;
- a module for relating the test datum to the projections of the the learning set data,
- a step of determining the class of the projections of the learning set data in relation to the test datum, which provides the most probable class of the test datum.

15. System according to claim 14, **characterised in that** the digitised data include one or more measurements of physical characteristics of an object.

16. System according to either claim 14 or claim 15, **characterised in that** the object is:

- a material object or a group of material objects, or;
- a person or a group of persons, or;
- a state of a system or a group of states of a system.

17. System according to any one of claims 14 to 16, **characterised in that** the relative spatial organisation of the classes is preserved in the representation space **in that** two separate classes of data from the learning set have the projections of their data assembled in two respectively separate connected zones if the data of these two classes are themselves assembled in two separate connected zones of the original space.

18. System according to claim 17, **characterised in that** the relating module comprises a module for projecting the test datum into the representation space, the most probable class of the test datum being the class which corresponds to the connected zone in which the projection of the test datum is located.

19. System according to any one of claims 14 to 18, **characterised in that** the original metric space has a dimension N$\geq$3 and the metric representation space has a dimension 2 or 3.

20. System according to any one of claims 14 to 19, **characterised in that** the projections of the data of the learning set are represented in an orthonormal reference system of the metric representation space.

21. System according to any one of claims 14 to 20, **characterised in that** a distance $d^*_{ij}$ in the representation space between the projections of any two data $i$ and $j$ of the learning set is the distance which minimises a stress function $E = \sum_{i,j} E_{ij}$, where $E_{ij}$ is a function of local stress depending on the distance between the data $i$ and $j$, such that $E_{ij} = F (d_{ij}, d^*_{ij}) \times G (d_{ij}, d^*_{ij})$, where:

- $d_{ij}$ is a measurement of the dissimilarity between the data $i$ and $j$ in the original space and $d^*_{ij}$ is the distance between the projections of the data $i$ and $j$ in the representation space;

- F is a function which quantifies the difference between $d_{ij}$ and $d^*_{ij}$, F being at a minimum when $d_{ij} = d^*_{ij}$;
- G is a weighting function such that:

$$G\,(d_{ij},\, d^*_{ij}) = \varphi(G^{intra}\,(d_{ij},\, d^*_{ij}),\, G^{inter}\,(d_{ij},\, d^*_{ij}),\, C_{ij}),$$

where:

- $C_{ij}$ is the conjoint membership level having a value in a real range,
- $G^{intra}$ and $G^{inter}$ are weighting functions;
- $\varphi$ is a function such that there exists at least one value of $C_{ij}$ for which $G = G^{intra}$ and at least one value of $C_{ij}$ for which $G = G^{inter}$.

22. System according to claim 21, **characterised in that** the conjoint membership level has a value in {0, 1}, having the value 1 if $i$ and $j$ belong to the same class and having a value 0 otherwise.

23. System according to claim 22, **characterised in that**:

-

$$- F(d_{ij},\, d^*_{ij}) = \left| d_{ij} - d^*_{ij} \right|^2;$$

- $G^{intra}\,(d_{ij},\, d^*_{ij}) = g(d_{ij})$ and $G^{inter}\,(d_{ij},\, d^*_{ij}) = g(d^*_{ij})$, where $g$ is the inverse sigmoid function with the parameter $\lambda$.

24. System according to any one of claims 14 to 23, **characterised in that** the data are digitised handwritten characters, the classes grouping identical characters.

25. System according to any one of claims 14 to 23, **characterised in that** the data are digitised seismic curves, one class grouping curves of which the recording corresponds to an earth tremor and another class grouping curves whose recording does not correspond to an earth tremor.

26. System according to any one of claims 14 to 23, **characterised in that** the data are digital photographs of melanomas, one class grouping photographs of malignant melanomas and another class grouping photographs of benign melanomas.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **FISHER R.A.** The Use of Multiple Measurements in Taxonomic Problems. *Annals of Eugenics,* 1936, 179-188
- **MIKA S. ; RÄTSCH G. ; WESTON J. ; SCHÖLKOPF B. ; MÜLLER K-R.** Fisher Discriminant Analysis with Kernels. *Neural Networks for Signal Processing,* 1999, vol. 9, 41-48
- **LAANAYA H. ; MARTIN A. ; ABOUTAJINE D. ; KHENCHAF A.** A New Dimensionality Reduction Method for Seabed Characterization: Supervised Curvilinear Component Analysis. *IEEE OCEANS'05 EUROPE,* 20 Juin 2005
- **LAANAYA H. ; MARTIN A. ; KHENCHAF A. ; ABOUTAJINE D.** Une nouvelle méthode pour l'extraction de paramètres : l'analyse en composante curvilinéaire supervisée, Atelier Fouille de données complexes dans un processus d'extraction de connaissance. *Extraction et Gestion des Connaissances (EGC),* 24 Janvier 2007, 21-32
- **O. KOUROPTEVA ; O. OKUN ; A. HADID ; M. SORIANO ; S. MARCOS ; M. PIETIKAINEN.** Beyond locally linear embedding algorithm - Technical Report MVG-01-2002. Machine Vision Group, University of Oulu, 2002
- **D. DE RIDDER ; O. KOUROPTEVA ; O. OKUN.** *Supervised locally linear embedding - Lecture Notes in Artificial Intelligence,* 2003, vol. 2714, 333-341
- **D. DE RIDDER ; M. LOOG ; M.J.T. REINDERS.** Local Fisher embedding. *Proceedings of the 17th International Conference on Pattern Recognition,* 2004, 295-298
- **S. WENG ; C. ZHANG ; Z. LIN.** Exploring the structure of supervised data by discriminant isometric mapping. *Pattern Recognition,* 2005, vol. 38, 599-601
- **GENG X. ; ZHAND.C. ; ZHOU Z.H.** Supervised nonlinear dimensionality reduction for visualization and classification. *IEEE Transactions on Systems, Man, and Cybernetics,* 2005, vol. 35 (6), 1098-1107
- **LI C.G. ; GUO J.** Supervised isomap with explicit mapping. *Proceedings of the 1st IEEE International Conference on Innovative Computing, Information and Control, ICICIC '06,* Août 2006
- **LESPINATS S. ; VERLEYSEN M. ; GIRON A. ; FERTIL B.** DD-HDS: a tool for visualization and exploration of highdimensional data. *IEEE Trans. Neural Netw.,* 2007, vol. 18 (5), 1265-1279